# EUROPEAN PATENT APPLICATION

(11) **EP 0 675 437 A2**
(43) Date of publication of application: **04.10.1995**
(21) Application number: 95104014.6
(22) Date of filing: 18.03.1995
(51) Int. Cl.: G06F 11/00, G06F 12/06

(54) **Self-testing secure-transaction computer input-output bus**

(30) Priority: 21.03.1994 GB 9405499
(71) Applicant: CYDON Technology Limited, Welwyn Garden City, Herts. AL8 6SG (GB)
(72) Inventor: Wolstenholme, Peter, St. Albans AL3 5LA (GB)

(57) **Abstract**

A computer input-output bus system employing an analog module-presence line by which a controller can detect if no modules, one module or more than one module have been selected in the addressing phase of each operation. Each module generates a unique code related to its position in the structure of the bus and returns it to the controller, so that other errors in selection are detected. In case of a detected error, write commands are terminated prematurely by the controller before being acted on by any incorrectly-selected module. Timings of signals on the bus are fixed with respect to a constant-frequency clock signal, as illustrated in Figure 1.

## Description

This invention relates to a structure of input-output bus for computer systems in which errors are detected in each transaction and the writing of data to devices other than those specifically addressed is inhibited.

Computer bus structures of many types are in wide use. They are employed to connect a controlling device such as a digital computer or a microprocessor to a number of modules which can accept or supply data as required by the intended purpose of the system. The bus is constituted of a number of signal lines interconnecting the controller and the controlled modules, so devised that a standard arrangement 0may be provided in each connected device for each possible type of transaction: reading data, writing data, requesting attention, and so on. The interconnections need not connect identical signals in the same fashion at each module position in the structure, as there will be a requirement to distinguish each module from the others, and other features may also impose some special form of interconnection. In order to ensure that modules designed by different persons may be connected to a computer bus there will be a defined sequence of operations called a "protocol" which specifies exactly how each operation must be performed and what timing restrictions are imposed.

Most widely-used computer bus structures are designed to match a specific type or series of computer or microprocessor, although with some ingenuity other types may be employed. The bus structure is frequently specified so as to achieve the highest attainable performance in service. It has been usual to expect the users of the bus to have a high level of technical skill and to be able to deal with a complex procedure for preparing each module for attachment to the bus. Furthermore, it has only been common to introduce very simple checking features into the bus protocol. For example, a data parity check which adds checking elements to groups of binary digits, and generates an alarm when data seems to be corrupted.

A significant maintenance problem arises when one module is selected for a transaction, and on account of a malfunction a different module responds, either in place of the module which should have been selected or at the same time. Some bus specifications, as for example the IEC 821 Bus (VME Bus) use a reply from a module such that the controller may detect the fault situation in which there is no response: this does not cover the cases of incorrect or multiple selection.

According to the present invention there is provided a computer input-output bus structure with a number of features which enhance the security of transactions and reduce the risk of errors, while at the same time greatly simplifying installation and maintenance. Several of these features are well known and have been widely employed although not always in this area of technology, and not generally in combination, while other features are original in nature.

Transactions on the bus are arranged in two parts. The first part is the addressing phase, in which a specific module is selected by the controller. In this phase the module returns a digital code word which is unique in that each module connected to the bus is assigned a different code word. The controller examines the code word and detects any discrepancy. At the same time the selected module returns a signal indicating its presence. This signal is of analog nature, in that when two or more devices return it at the same time the signal level is different from that produced by a single module. The controller can determine that one module only has been selected for the transaction.

In the second part of the transaction the data is usually transferred. In the case of a controller acquiring data the checking features will indicate whether the data should be discarded as being of uncertain origin. In the case of a controller wishing to load data into a register the transaction is abandoned at the end of the first part, so that the action of loading data is inhibited. In this way the loading of data into the wrong module is prevented.

In a practical case several other features will combine to enhance the security and maintainablilty of the equipment.

A specific embodiment of the invention will now be described by way of example with reference to the accompanying drawings in which:.
Figure 1 shows the timing of a typical bus transaction.
Figure 2 shows the timing of a transaction in which a selection anomaly has been detected.
Figure 3 shows the block diagram of a module in which the specific features of the invention are implemented, as an example.

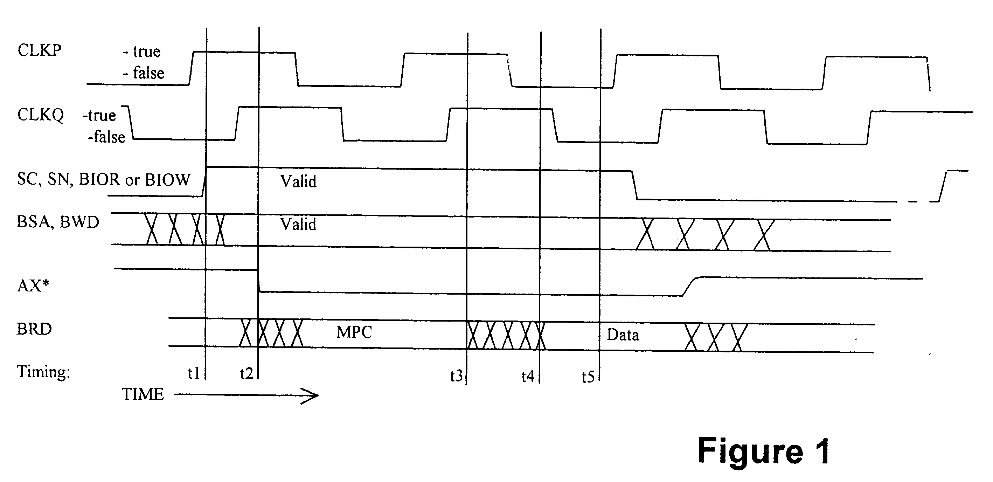

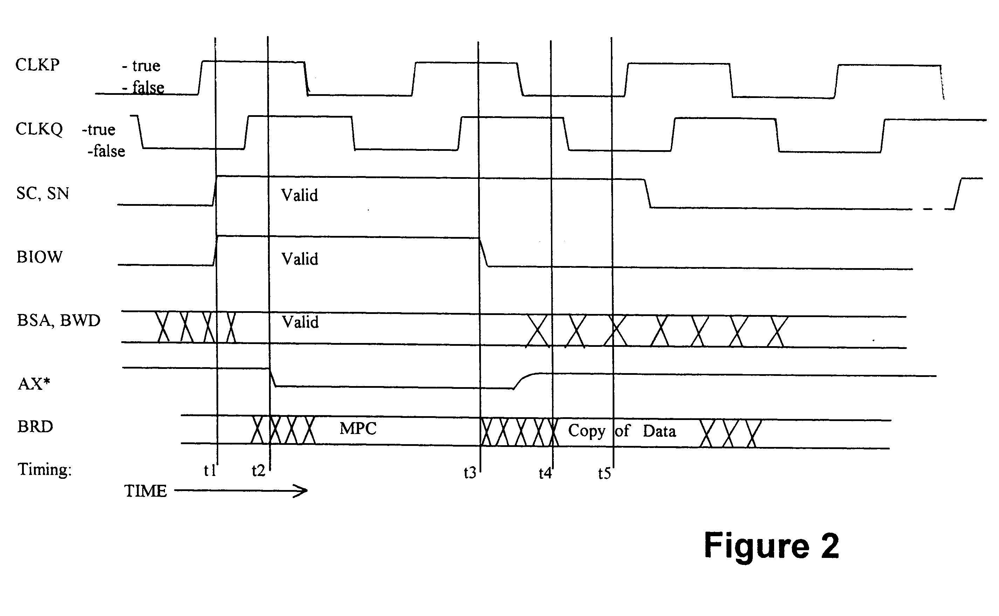

All operations occur at specific times in relation to the clock signals. There are two clocks, one clock being a square wave signal at a frequency not greater than 2 million Hertz (periods per second) and the second being a similar square wave whose transitions occur approximately mid-way between those of the first. These signals are referred to by the names CLKP and CLKQ respectively in Figures 1 and 2. The use of two clocks permits the connected devices to be so designed as to reject spurious transitions caused by imperfect signal transmission or noise injection, as when one clock is in a given state then only one transition of the other clock is expected and its sense is pre-determined.

The two signals CLKP and CLKQ are transmitted in the specific implementation cited as an example in a balanced form, in that two signal lines of the bus are used for each clock, sent on the bus in both true and inverted forms.

Control signals are transmitted on the bus, being generated by the controller. In the typical implementation these will include BIOW, the command to the addressed module to accept a data pattern for storage or some other action, BIOR, a command to the addressed module to supply data to the controller, and BRES, a general command to all stations to adopt a standard state, which is typically the quiescent state assumed when the system starts up. These signals are, and have been for many years, common practice. They are associated with selection signals and with data paths, which in the example are separate groups of signal lines. This is preferable for electrical transmission reasons to the commonly used shared data path over which data travels both to and from the controller. A further advantage of separation in the implementation cited as an example is that the protocol requires that, in cycles in which BIOW is set, the data sent out by the controller on the "WRITE DATA" path is returned to it, in the second phase of the transaction, on the "READ DATA" path. The controller checks that the data has not been corrupted, and on detecting any corruption may take appropriate measures, such as repeating the operation, raising an alarm, or opening a safety interlock.

The selection of the module is a vital part of the bus transaction, and is achieved by transmission, by the controller, of a selection code. In the typical case this will have several binary digits, and in the example there are two digits to specify from one to four assemblies of modules, commonly called crates or racks, and four binary digits to specify 16 possible modules in each such assembly. Each module connected to the bus may be selected, or addressed, by invoking a different code. In the implementation cited as a typical example, this is achieved by "geographical addressing" such that the bus wiring presents a differently transformed selection code, or "address code", to each module, for each code transmitted by the controller. All modules are designed to respond to the same address code, such as CRATE=0, POSITION=1. On account of the nature of the transformation this code can only be received by one module, for each code pattern transmitted as an address code, and only one module can be selected. The transformation may be arranged in various ways, and in the specific implementation cited as an example the well-known Gray coding principle is adopted, whereby the binary state of a single binary digit of the address code is inverted in the bus wiring in between each successive pair of module positions along the bus. This inversion is facilitated by the transmission of each signal on two lines of the bus, in true and inverted form, such that inversion of the sense of a binary digit is achievable by simply interchanging the two wires. The advantage of this selection scheme over those more frequently used is that no switches or links are employed to set the module address code, and a common source of errors is thereby removed.

The control signals, selection and sub-address signals, and data to the sent by the controller, if any, are transmitted on the bus at time t1, shortly after a false-to-true transition of CLKP, as shown in Figure 1. They are normally maintained for approximately two periods of the CLKP waveform.

Cross-hatching in the timing diagrams is meant to show times at which the signals are indeterminate and to illustrate that some of the bus signals need not be established very quickly, or at very precisely determined times: these signals are primarily the data and sub-address signals.

The invention specifies a method of detecting errors in module selection. These may originate from electrical faults in the addressed modules or in the controller, or in the wiring of the bus. They also be caused by transient electrical or electro-magnetic interference signals, introduced into the system at various points. The method combines two elements.

Firstly, the selected module must immediately supply a unique code called the "Module Position Code" (MPC). This code is defined for each address and can be checked by the controller. Secondly, the module must supply a drive to an analog line, called AX* in the timing diagram, which in the example is performed by switching a resistor to ground. In the controller, the lack of such a resistor may be detected, and the presence of two or more resistors may also be detected. The controller may be sure, at the completion of the first phase of the transaction, that one and only one module has been selected, and that it is the required module.

In the timing diagram, Figure 1, the module produces the MPC and AX* signals at time t2, after t1 and shortly after a false-to-true transition of CLKQ.

In the specific embodiment of the invention cited as an example the Module Position Code of each module is generated automatically at the end of the RESET procedure, when the system is being initialised. At this time the controller drives the standard selection code (CRATE = 0, POSITION = 1) and each module connected to the bus receives a different code, related to its installed position. An 8-bit MPC is then generated from the code at the selection lines of the bus, and each module has a different MPC. The MPC is sent on the data bus lines which are defined for "READ DATA". It is sent to the controller in the first phase of the transaction, after time t2 and before time t3, and data is transmitted in the second phase, after time t3 and until the controller has removed the control signals BIOR or BIOW, as shown in Figure 1.

This process could be made to malfunction if an error were to be present in the system at the instant of initialisation, which is why it is advisable for it to be supplemented by the analog module response feature in conjunction with a software test of the entire system, such that all modules are selected in turn and checked for single-module selection in each case. For this purpose a standard internal register sub-address is provided, to which data may be written and automatically checked by the method described above. A further degree of security would be achieved by means of a memory device, in each module, containing unique data such as the type and serial number of the module, to be checked by a software routine immediately after initialisation.

The bus timing is so specified as to permit the controller, on detecting a selection error, to cut short the transaction as shown in the timing diagram, Figure 2, at about time t3. The design of the modules will be such as to place any possible action commanded by the controller very late in each transaction, typically between times t4 and t5 shown in Figure 1 so that a premature termination of the command signals will prevent such actions from ocurring.

The timing diagrams are simplified in that they do not show the effects of finite transmission times along the bus, which will cause the timing relationships at various points to be slightly different, without altering the principle of operation. In a practical implementation the effects of delays along the bus will be taken into account when determining the precise specifications for bus operation in respect of permissible timings.

In the specific embodiment of the invention cited as an example the analog signal line which is employed to detect the number of selected modules is biassed by the controller, which endeavours to supply a current of approximately 10 mA to the signal line, but is not able to establish a potential of more than 3.2 volts on the line, measured with respect to the common or gound potential to which all signals on the bus are referenced. Each module, when it is selected, connects a resistor of value approximately 185 ohms between the analog signal line and the common ground. If one and only one module is selected the analog line will take up a potential of approximately 1.85 Volts, while if two modules are selected, on account of a malfunction of any nature, the potential of the analog line will fall to less than 1.0 Volt. If no module is selected the potential on the analog line will stay at the potential assumed when no operations are taking place, at about 3 Volts.

Each module may require to have several internal features selected, for reading or writing data or commands. In the example, seven sub-address signal lines are provided on the bus, such that up to 128 internal features may be distinguished in each module. In the example these are not further checked, as it is assumed that the consequences of, and difficulty of recuperating from, errors in sub-addressing are less serious than errors in selecting the module itself. Nevertheless, two measures are proposed. Firstly, in cases where data registers have safety or other major implications, their addresses are selected such that at least two binary digits differ, so that a single-digit fault will not produce a valid sub-address. If the differences are such that to generate a valid address from another one a binary "1" must change to "0" and a binary "0" in a different position must change to "1" then errors of the sort which change some or all digits to "1" , and those which change some or all digits to "0" are also protected against. Secondly, an additional bus signal line is employed to signal the detection of module errors. This line is driven at any time during the transaction by the module which is selected, to the true or false states, and in particular, during the second part of the transaction, will be driven true if an invalid sub-address is found. The controller may then, on detecting a module error, indicate an alarm condition, to be dealt with as appropriate. One sub-address is reserved for testing, and is considered valid while having no effect. This sub-address may have various data patterns sent to it, and the integrity of the data paths in both directions may be checked from time to time.

Other features of the design cited as an example, such as interrupt lines and power supplies, are in accordance with the current practice or state of the art.

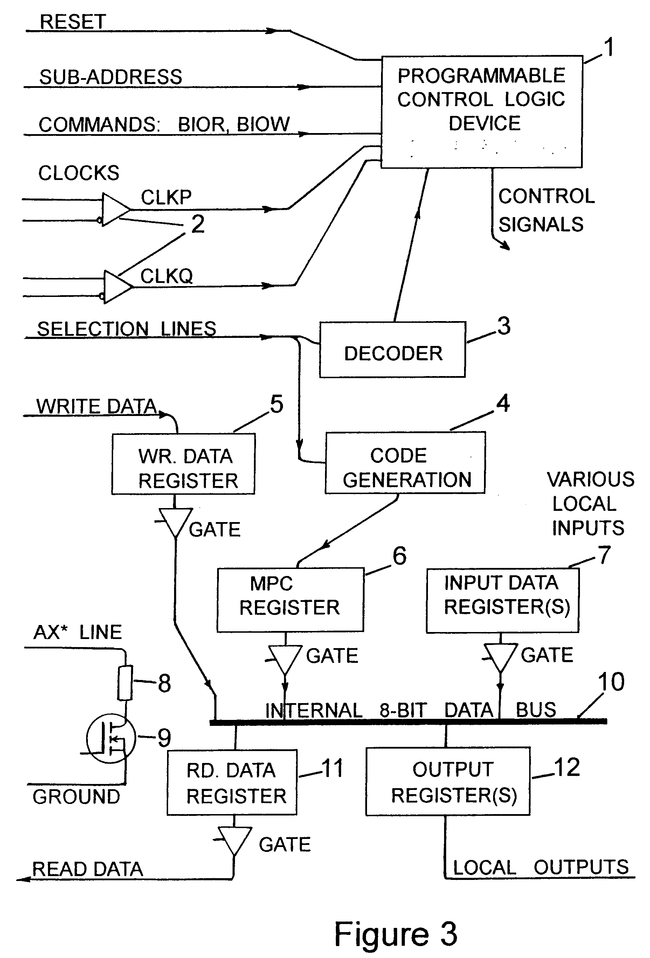

Figure 3 shows the block diagram of the bus interface in a module corresponding to the specific embodiment cited as an example. Signals of the bus are those on the left hand side of the diagram. The balanced clock signals pass to comparators 2 and the comparator outputs CLKP and CLKQ are connected to programmable logic device 1. Clocks CLKP and CLKQ are square waves at 1.8 MHz approximately.

The selection codes arrive in true and complement forms, as SN0 to SN3 inclusive to select one position of 16 and SC0 with SC1 to define a crate. The inverted inputs are identified as SN0* to SN3*, and SC0* plus SC1*. Only one possible pattern will produce an output from the decoder 3, which is connected to the control logic device 1. This logic device is programmed to control the various events which occur when a module is selected and it employs an internal finite state machine driven by the two clock inputs to determine the timing of each action.

The module position code register 6 in Figure 3 is loaded with an 8-bit pattern derived from the six selection lines and their inverted forms, about one microsecond after the end of the RESET signal. This pattern is the Module Position Code (MPC), and is created in a simple logic array 4. A gating signal is generated during the first part of the transaction, and causes the MPC code word to pass onto the internal 8-bit data bus 10 and into the register 11, which drives the data path to the controller. At the same time the transistor 9 connects the resistor 8 betwen the analog bus line identified as AX* and the common ground potential.

A data register 5 takes the data arriving on the data path from the controller, and stores it for the rest of the transaction. This is only the case for "writing" data from the controller into some feature of the module, in this case the register or registers shown as item 12. The data must pass from the register 5 to the register(s) 12 over the internal 8-bit data bus 10, and this will take place in the later part of the operation, when the MPC is no longer transmitted to the bus 10 from register 6.

In the case of the controller requesting data from the module, this data is passed onto the internal data bus from an input register 7, selected according to the sub-address code, and then passes into the read data register 11, from which it is transmitted to the controller over the read data path. This takes place after time t3 in the timing diagram Figure 1, after the period when the MPC is transmitted to the controller on the same data path. A gating system ensures that this data path is only driven when the module is selected, as it is shared with other modules on the bus.

In write operations the data arriving at 5 from the controller is sent to the output register(s) 12, again after time t3, and also passes via the register 11 back to the controller, where it is compared with the data sent by the controller.

Detailed drawings for the bus controller are not included in this description as the design will be specific to the computer or microprocessor employed. The selection and sub-address signals will typically be derived from a set of computer address lines, and the command signals from those issued by the computer to the control interface. The data output lines will be driven when data is transmitted. Data input lines will be wired to line receivers, and then to intermediate registers which store the MPC and the returned data respectively, at suitable instants of time (shortly before t3 and shortly after t5 in Figure 1) in the operation. The MPC is compared with the MPC which is expected, for the specific module which should have been selected, and any discrepancy is detected. The analog line AX* is conected to two high-speed comparators, with threshold voltages set to approximately 2.4 Volts and 1.3 Volts: a potential in excess of 2.4 Volts is interpreted as showing no module responding as being selected, and a potential below 1.3 Volts as indicating multiple module selection. Errors in either the MPC code or the AX* level will cause the write command BIOW to be terminated prematurely, at about t3 as shown in the timing diagram, Figure 2.

## Claims

1. A computer or microprocessor input-output bus system comprising a number of groups of signal lines, each with defined functions, which provides means of selecting a module and sending data or commands to it, and for receiving data from the selected module, and providing means whereby the controller may detect, during each cycle of operation defined for the bus, either that no module or that more than one module connected to the bus is selected by an operation which is intended to select only one such module, and may also confirm that if one module is selected it is indeed the module which was intended to be selected: also providing means by which, on detecting an anomaly in selection, the controlling device will cause the current cycle of operation to be altered in such a way as to prevent commands being executed or data being written. Because the checking process is integrated into the basic method of performing each cycle of operation, transient errors, such as those introduced into the system by extraneous noise sources, are detected, as well as permanent errors caused by the ocurrence of failures in components of the system, and in the case of such a failure any subsequent attempt to send data to or to perform command actions in what might be an incorrectly selected module will be inhibited. Furthermore, the group of signals on the bus which provides means of selecting the modules is so transformed as to be presented in a different form at each position on the bus to which a module might be connected, and this feature obviates the need to adapt, configure, or otherwise prepare the diverse modules before they are connected at any specific position on the bus, as opposed to any other position, so reducing the risk of errors when installing modules.

2. A computer input-output bus system as claimed in Claim 1 in which the selection process is self-checking by means of a pre-defined code which any selected module must return to the controller together with a special signal line of the bus which enables the controller to determine how many modules are selected at any instant. The pre-defined code words are unique to each module, and are loaded into each module during an initialisation process during which a fixed module-selection code pattern is driven on the bus, this pattern being transformed in passage from each possible module position to the next in such a way as to be presented in a different form at each module position on the bus. The special signal line is required because the alternative idea, which would be to determine at the controller how many modules are sending data to it, from the strength of the received data signals, would, at the high speed of which this system is capable, degrade the margins of safety in the transmission of data.

3. A computer input-output bus system as claimed in Claim 1 wherein the data transmitted by the controller on one data path to a selected module is returned to the controller by a separate path and is compared by the controller with the data transmitted in order to detect errors in the transmission of data.

4. A computer input-output bus system as claimed in Claim 1 in which two regular timing signals at a fixed frequency are transmitted on the bus in order to define the instants at which certain events should take place, and in which one of these two timing signals is a delayed copy of the other one, so as to enable measures to be taken to reject certain spurious transitions in either timing signal which might otherwise cause a malfunction.
